# EUROPEAN PATENT SPECIFICATION

(11) **EP 2 544 324 B1**
(45) Date of publication and mention of the grant of the patent: **23.04.2014**
(21) Application number: 12175158.0
(22) Date of filing: 05.07.2012
(51) Int. Cl.: H02J 1/14, H02J 1/00

(54) **Control system and method for optimizing the energy consumption of a civilian and/or industrial power plant and a civilian and/or industrial power plant with optimized consumption**
Steuerungssystem und Verfahren zur Optimierung des Energieverbrauchs eines zivilen und/oder industriellen Kraftwerks, und ziviles und/oder industrielles Kraftwerk mit optimiertem Verbrauch
Système de commande et procédé pour optimiser la consommation d'énergie d'une centrale civiles et/ou industrielle et centrale civile et/ou industrielle avec consommation optimisée

(30) Priority: 07.07.2011 IT MI20111269
(43) Date of publication of application: 09.01.2013
(73) Proprietor: Raspa, Tiziano, 21040 Jerago Con Orago (VA) (IT)
(72) Inventor: Raspa, Tiziano, 21040 Jerago Con Orago (VA) (IT)
(74) Representative: Bonatto, Marco

(56) References cited:
- EP-A2- 2 200 143
- US-A1- 2010 259 225

## Description

The present invention refers to a control system and method for optimizing the energy consumption of a civilian and/or industrial power plant, particularly but not exclusively used in the electrotechnical field and in other fields.

The present invention moreover concerns a civilian and/or industrial power plant with optimized consumption.

The growing demand of energy and the simultaneous natural and progressive depletion of conventional energy sources, like for example fossil fuels, have determined over the last years a growing interest in exploiting so called renewable energy sources.

Indeed, it is known, to design and make power plants, both civilian and industrial, provided with renewable generators that are capable of producing electric energy from sources of renewable energy, like for example the sun, wind, the sea, the heat of the earth. In particular, photovoltaic generators are very common on the market, comprising one or more photovoltaic panels which, when exposed to solar radiation, are capable of producing electric energy in the form of direct current or DC. Such photovoltaic generators are usually provided with a so called DC/AC inverter that is with devices assigned to converting the direct current in outlet from the panels connected to one another, (generally from 200 V to around 800 V) into an alternating current or AC (generally of 230V single phase for plants up to a few kW, or 400 V triple phase for plants with power of more than 5 kW), obtaining a connection between the photovoltaic generators and the electric energy distribution network. In such a way the photovoltaic generators can supply electrical users both of the civil type, in the case of houses and/or apartment blocks, and of the industrial type, in the case of warehouses or factories.

Moreover, the photovoltaic generators known today can also be connected to the national electric distribution network and/or to at least one rechargeable battery in the case of so called stand-alone plants.

In the first case, the energy, produced in excess with respect to the consumption of the electrical users, is introduced into the national electric distribution network so as to be sold. The selling conditions of the energy produced by renewable generators, however, are not always such as to lead to an actual saving for the user. It is therefore advantageous to size the photovoltaic generator so that it does not produce much more than what is the real need of the electrical users connected to it.

In the second case, the energy in excess, produced by the photovoltaic generator, is accumulated through Uninterruptible Power Supplies (UPS) or batteries equipped with DC/AC inverter assigned to converting the direct current to the ends of the batteries into alternated current for supplying the electrical users connected to the generator. The energy accumulated is indeed advantageously used to supply the electrical users during the night when the production of energy is substantially inactive. In such a case, therefore, it is necessary to equip the power plant with very expensive batteries or UPS that have a very short life time, for example 7-8 years.

Moreover, the DC/AC inverter and/or the uninterruptible power supply must be sized precisely according to the requirements of the power plant of the user which always has many variables such as for example the simultaneity of the loads. Moreover, over time there can be variations of the loads due to replacement of the machinery and therefore it is necessary to carry out a new sizing.

The object of the present invention is that of avoiding the aforementioned drawbacks and in particular that of providing a control system and method that is capable of optimising the energy consumption of a civilian and/or industrial power plant in a simple, cost effective and particularly functional manner.

This and other objects according to the present invention are achieved by making a control system and method for optimizing the energy consumption of a civilian and/or industrial power plant as outlined respectively in the independent claims 1 and 7. Analogously, the objects according to the present invention are achieved with a civilian and/or industrial power plant as defined in the independent claim 10.

Further characteristics of the system and of the control method, as well as of the civilian and/or industrial power plant with optimized consumption are object of the dependent claims.

The characteristics and the advantages of a system and of a control method, as well as of a civilian and/or industrial power plant with optimized consumption, according to the present invention shall become clearer from the following description, given as an example and not for limiting purposes, with reference to the attached schematic drawings, in which:
- figure 1 is a block diagram of a first embodiment of a civilian and/or industrial power plant with optimized consumption according to the present invention;
- figure 2 is a block diagram of a second embodiment of a civilian and/or industrial power plant with optimized consumption according to the present invention;
- figure 3 is a block diagram of a third embodiment of a civilian and/or industrial power plant with optimized consumption according to the present invention.

With reference to the figures, a civilian and/or industrial power plant with optimized consumption is shown, wholly indicated with reference numeral 10.

The civilian and/or industrial power plant 10 can be connected to an external electric energy distribution network or external electrical network 60, for example the electrical network of the city, region or nation, and/or to accumulation means of electric energy (not illustrated) like for example one or more rechargeable batteries.

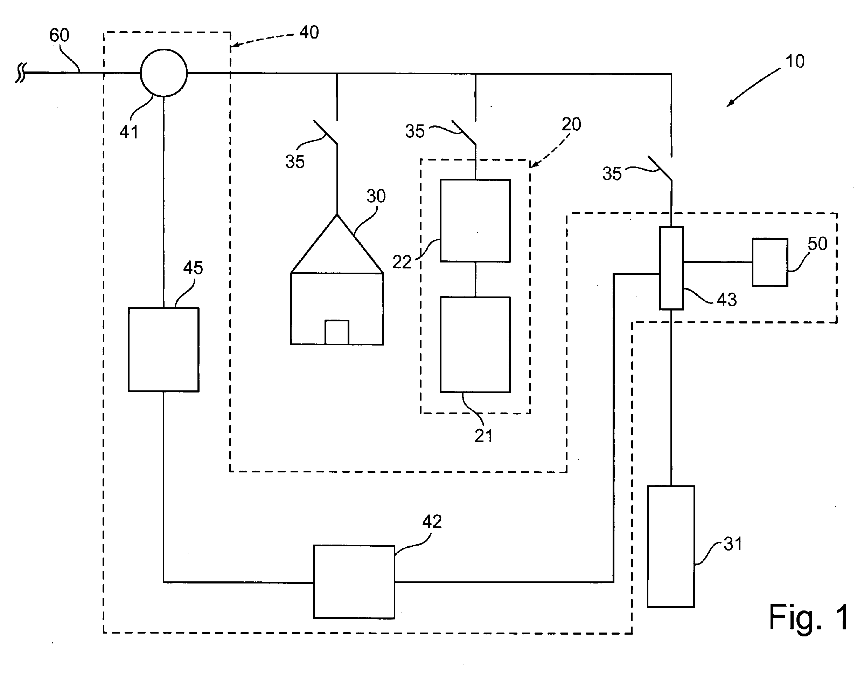

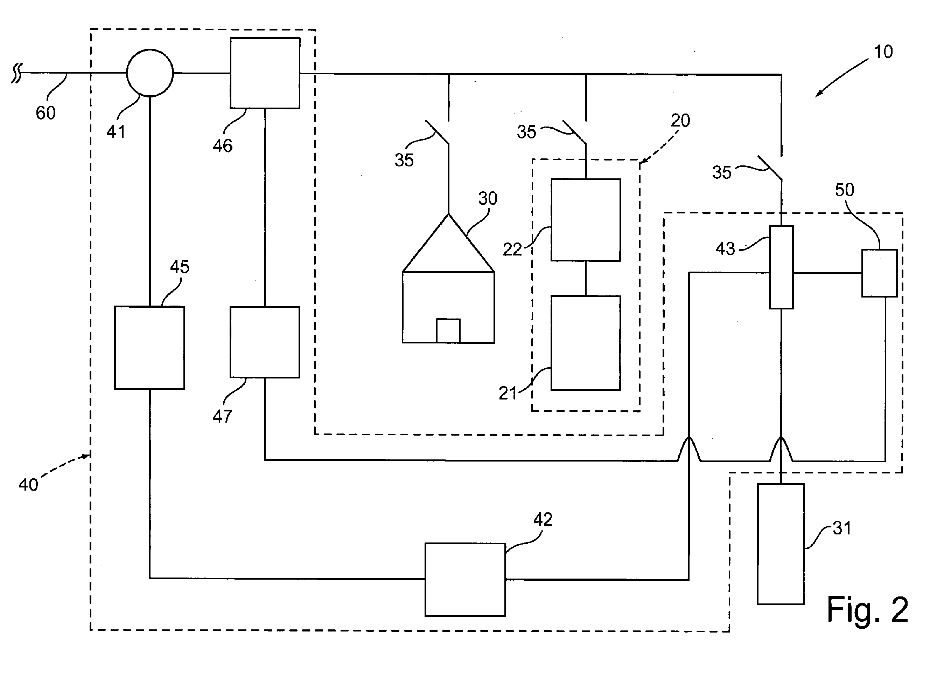

Such a civilian and/or industrial power plant with optimized consumption 10 comprises a renewable generator 20 that is suitable for producing electric energy from renewable sources, and a plurality of electrical loads 30, 31 that are supplied by the renewable generator 20 and/or by the external network 60 and/or by the accumulation means of electric energy. As an example the renewable generator 20 can be a photovoltaic generator or a wind generator and so on. As an example the plurality of electrical loads 30, 31 can be the group of the apparatuses and devices connected to the electrical users of a house or of an industrial warehouse, as illustrated in figures 1 and 2.

In the particular embodiment illustrated the renewable generator 20 is a photovoltaic generator and comprises one or more photovoltaic panels 21 that are suitable for producing electric energy in the form of direct current, for example from 200 V to 800 V, and a DC/AC inverter 22 connected to the panels 21 themselves. Such a DC/AC inverter 22 is a device suitable for converting the direct current produced in outlet from the photovoltaic panels 21 into alternated current, for example 230 V or 400 V.

According to the present invention the civilian and/or industrial power plant 10 with optimized consumption also comprises a control system 40 that is suitable for controlling at least one 31 of the plurality of electrical loads 30, 31.

As visible in figure 1 or 2, the renewable generator 20 and the plurality of electrical loads 30, 31 are connected to one another by interposition of a plurality of safety switches 35 that are suitable for automatically interrupting such connections in the case of conditions of overload or in any case of danger for the generic user.

The at least one controlled electrical load 31 from the control system 40 is preferably a device for converting the energy suitable for converting electric energy into thermal energy, such as for example a boiler or a stove.

In such a case the device for converting the energy is preferably provided with at least one sensor for detecting the temperature of the water or air heated by the device for converting the energy itself; the temperature sensor, in such a case, is suitable for interrupting the connection between the at least one controlled electrical load 31 and the renewable generator 20 and/or the electrical network 60 and/or the accumulation means of electric energy, if the temperature detected exceeds a predetermined temperature threshold.

The control system 40 comprises power detection means 41, 45 suitable for detecting the difference between the instantaneous electric power generated by the renewable generator 20 and the instantaneous electric power absorbed overall by the plurality of electrical loads 30, 31.

In particular such power detection means 41, 45 comprise at least one first power sensor 41, which is suitable for performing continuous detections, and a power converter 45 connected to it.

The power converter 45 is suitable for generating a signal of amplitude that is proportional to the power detected by the sensor 41 itself.

It is thus clear that by instantaneous power detected may be considered an average power detected over a detection period for example over a few milliseconds, where such a detection period is equal to at least the time necessary for generating the signal by the power converter 45.

Preferably the at least one first power sensor 41 is made by means of one or three current transformers for amperometric detection and a 230 V or 400 V voltmetric socket, in the case in which the power plant 10 is respectively single phase or triple phase.

The control system 40 according to the present invention moreover comprises a unit for regulating power 42, 43 programmed for or, in any case, suitable for controlling, according to a first operation modality, the electric power absorbed by at least one controlled load 31 on the basis of the detection of the power detection means 41, 45.

In detail the regulating unit 42, 43 carries out the aforementioned power control so that the difference between the instantaneous electric power generated by the renewable generator 20 and the instantaneous electric power absorbed overall by the plurality of electrical loads 30, 31 reaches or approaches as much as possible a first predetermined target power.

The first predetermined target power can preferably be set by a user through first interface means (not illustrated) which are part of the control system 40 and are connected to the regulating unit 42, 43; for example the first interface means can comprise a numeric keypad.

Preferably the power regulating unit 42, 43 comprises an automatic switch 43 controllable in voltage/current suitable for connecting in a selective way the at least one controlled electrical load 31 to the renewable generator 20 and/or to the external electrical network 60 and/or to the electric energy accumulation means. The automatic switch 43 is thus capable of partialising the supply voltage on the at least one controlled electrical load 31.

The automatic switch 43 is for example of the thyristor type or of the electromechanical type.

In such a case, the signal generated by the converter 45 is preferably an analogue signal and in particular a current signal having an amplitude comprised in the range from 4 mA to 20 mA; such an amplitude is proportional to the detection by the first power sensor 41 according to a conversion scale which can be set through second interface means (not illustrated), for example a keypad, connected to the power converter 45. The connection between the at least one first power sensor 41 and the converter 45 is preferably cabled. Alternatively the at least one first power sensor 41 and the converter are suitable for communicating with one another wirelessly.

Advantageously, the power regulating unit 42, 43 comprises a piloting unit 42 that is connected to the power converter 45 and that is suitable for sending a control signal to the automatic switch 43 on the basis of the analogue signal generated by the converter 45 and on the first predetermined target power.

In particular the piloting unit 42 and the automatic switch 43 provide for partializing the voltage on the at least one controlled electrical load 31 so that the power detected by the power detection means 41, 45 does not reach the first predetermined target power.

It is important to underline that the piloting unit 42 is moreover suitable, when initiating the power plant 10, for carrying out a self-learning procedure of the electrical characteristics of the at least one controlled load 31. The electrical characteristics of the controlled load 31 are stored in memory means with which the piloting unit 42 can be advantageously provided. In such a way the piloting unit 42 is capable of controlling the automatic switch 43 partializing the supply voltage in the most suitable manner for the electrical characteristics of the controlled load 31. In the case in which the controlled load 31 is provided with a temperature sensor it is possible to implement a self-learning procedure of the thermal-electric characteristics of the controlled load 31 which makes it possible to track the electrical characteristics of the same with the variation of the temperature reached by the load itself.

Preferably, the control system 40 also comprises a device 50 for turning it on/off connected to the automatic switch 43 so as to be able to activate and/or deactivate it.

Preferably, the turning on/off device 50 is a reset jumper for resetting the control logic of the automatic switch 43.

Such a turning on/off device 50 can be suitable for being activated manually and/or by means of an external remote control and/or by means of a control coming from a power balancer.

Preferably, the control system 40 comprises a second power sensor 63, which is suitable for performing continuous detections of the power generated by the renewable generator 20 and a first switching device 61 connected to such a second power sensor 63 and to the regulating unit 42, 43.

The first switching device 61 is suitable for assuming a first and a second operative position, in which it allows the selective connection between the power converter 45 and respectively the first power sensor 41 or the second power sensor 63. In particular, the first switching device 61 is advantageously suitable for changing operative position following a manual actuation, for example by pressing a button, or following the reception of a control signal. Such a control signal can be sent by an operator by means of a remote control (not illustrated), or automatically by a thermoregulator (not illustrated) associated to the controlled load 31.

At the first operative position of the first switching device 61 the regulating unit 42, 43, assumes the first operation modality in which it controls the power absorbed by the controlled load 31 on the basis of the first predetermined target power as previously described. On the other hand, at the second operative position of the first switching device 61, the regulating unit 42, 43 assumes a second operation modality in which it controls the load 31 so that the power absorbed by the same reaches or approaches as much as possible the power generated by the renewable generator 20.

In such a manner, in the case in which the controlled load 31 is a boiler for providing hot water to a house, the switching device 61 ensures the so called health priority. Indeed, in such a case, when there is a demand for hot water, it is possible to dedicate all the power generated by the renewable generator 20 to the heating of the water contained in the boiler.

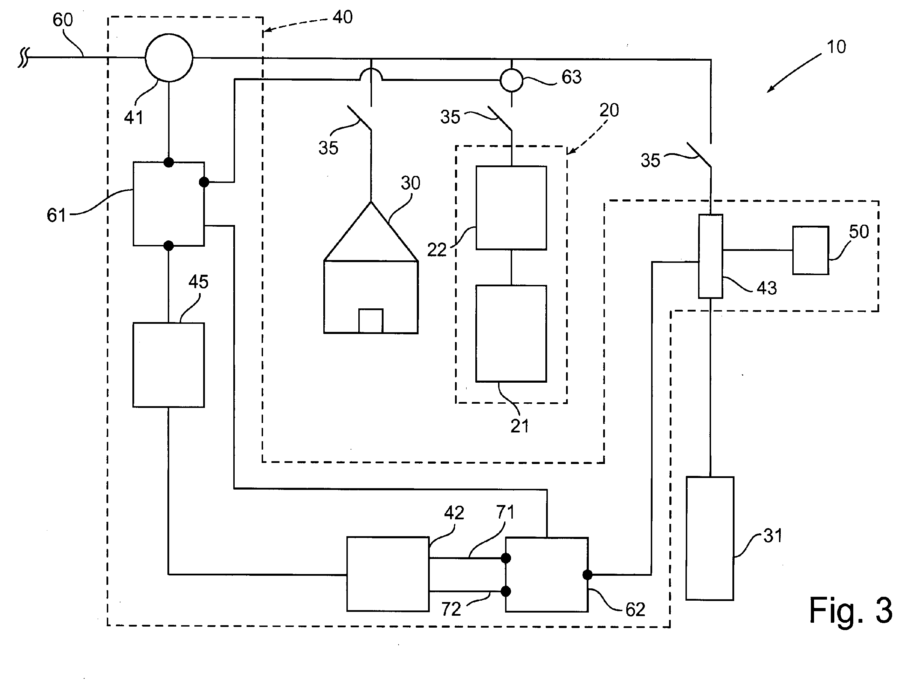

The switching from the first to the second operation modality, and vice versa, of the regulating unit 42, 43 can be made by sending a control signal from the first switching device 61 to the piloting unit 42. In such a case the first switching device 61 can be, for example, provided with a control unit (not illustrated) which when the operative position has been changed, sends a corresponding control signal to the piloting unit 42. In an alternative embodiment the piloting unit 42 is provided with two output lines 71, 72, as visible in figure 3, and with a second switching device 62 connected to the first switching device 61. In particular, the piloting unit 42, at any input signal, sends on the first 71 and on the second 72 output line a control signal, for the automatic switch, for carrying out the first and the second operation modality, respectively.

In such a case, it is the second switching device 62 that switches the regulating unit 42, 43 between the first and the second operation modality; indeed, the second switching device 62 is suitable for connecting the first 71 or the second 72 output line to the automatic switch 43, respectively at the first or second operative position of the first switching device 61.

In the case in which the civilian and/or industrial power plant 10 is connected to the external electrical network 60, the control system 40 preferably comprises a counting device 46 that is suitable for detecting the overall power exchanged with the network itself.

In particular, the electrical power exchanged between the power plant 10 and the external electrical network can be positive or negative according to whether at the moment of the detection the renewable generator 20 has produced too much or too little electric energy respectively with respect to the energy required by the plurality of electrical loads 30, 31. It is clear that if the exchanged electrical power is negative the owner of the power plant 10 is in debt of energy with the external electrical network 60.

Preferably, the control system 40 also comprises a control unit 47 that is suitable for activating the automatic switch 43 through the turning on/off device 50, when the total electrical power exchanged with the external electrical network reaches a second predetermined target power. Such a second target power is set by the user through third interface means (not illustrated) with which the control unit 47 is preferably provided.

The second target power is thus preferably the threshold value beyond which the user has interest in optimising the consumption of the power plant exploiting the excess energy produced by the renewable generator 20 to supply at least one controlled electrical load 31.

The method for controlling a civilian and/or industrial power plant with optimized consumption according to the present invention is as follows.

Such a control method comprises the operation of setting a first target power representing the difference between the instantaneous electric power generated by the renewable generator 20 and the instantaneous electric power absorbed overall by the plurality of electrical loads 30, 31 of which at least one is an electrical load 31 controlled by the control system 40.

The first target power, in particular can be positive in the case in which it is desired to use part of the electrical power produced in excess by the renewable generator 20 for supplying the controlled loads 31. On the other hand, such a first target power can be negative in the case in which the electrical power produced by the renewable generator is completely absorbed by the loads 30, 31 and it is desired to use the electrical power, coming from the external electrical network 60 and/or from the electric energy accumulation means, for supplying the controlled loads 31. Finally, a zero value is set for the first target power if it desired to use all the electrical power produced in excess by the renewable generator 20 for supplying the controlled loads 31.

Subsequently, it is provided the operation of detecting the difference between the instantaneous electric power generated by the renewable generator 20 and the instantaneous electric power absorbed overall by the electrical loads 30, 31.

According to the present invention, on the basis of the aforementioned detection, the electric power absorbed by the at least one controlled electrical load 31 is controlled so that the difference between the instantaneous electric power generated by the renewable generator 20 and the instantaneous electric power absorbed overall by the electrical loads 30, 31 reaches or approaches as much as possible the first set target power.

Such a step of controlling the power is performed by activating the automatic switch 43 that is suitable for connecting in a selective way the controlled electrical load 31 to the renewable generator 20 and/or to the external electrical network 60 and/or to the electric energy accumulation means. In detail the automatic switch 43 is activated according to one of the *per* se known piloting techniques in voltage/current, like Zero Crossing, Single Cycle, Burst Firing and Phase Angle. Preferably the control method comprises the operation of carrying out a procedure of self-learning the electrical and/or thermal-electric characteristics of the at least one controlled load 31. Such a self-learning procedure can be carried out at any time and preferably at the initiation of the civil/industrial power plant 10.

In the case in which the civilian and/or industrial power plant is connected to the external electrical network 60 the control method advantageously comprises the operation of setting a second target power representing the value of the electrical power totally exchanged between the power plant 10 and the external electrical network 60.

After setting the value of the second target power the control method, thus, provides for the operation of detecting the electrical power totally exchanged between the power plant 10 and the external electrical network 60.

In the case in which such overall electrical power exchanged with the external electrical network 60 is substantially equal to the second target power the automatic switch 43 is activated so as to control the power absorbed by the controlled load 31.

On the contrary, in order for the overall electrical power exchanged with the external electrical network 60 to be substantially different from the second target power the control method provides for the deactivation of the automatic switch 43 in order to inhibit the execution of the control step of the power absorbed by the controlled load 31.

From the description carried out the characteristics of the system and of the control method for optimizing the energy consumption of a civilian and/or industrial power plant object of the present invention should be clear, just as the relative advantages should also be clear.

Analogously, the advantages and the characteristics of the civilian and/or industrial power plant with optimized consumption according to the present invention are clear.

Indeed, the control system makes it possible to convert the electric energy produced in excess by the renewable generator with respect to the energy needs of the electrical users connected to it into thermal energy. In such a way the renewable generator provides energy useful for heating the air and/or the water used in a house or in a factory.

Therefore, in the case in which the civilian and/or industrial power plant is connected to the external electrical network, the control system makes it possible to regulate the use of the electric energy in excess so as to minimize the energy exchange with such an external electrical network. The energy produced in excess, instead of being sold at rates that are disadvantageous for the owner of the renewable generator, can be used so as to satisfy in a more complete manner the energy need of the house and/or of the factory of the owner itself.

The user, therefore, has the possibility of deciding, by setting the first target power, the modality of electric energy exchange with the external electrical network. Indeed, the first target power allows the user to set the amount of electric energy in excess to be exchanged with the network; by setting a null value for the first target power, for example, the user decides to use the total amount of energy produced in excess by the renewable generator for supplying the controlled loads.

Otherwise, the second target power allows the user to set the activation conditions of the regulating unit. For example, in the case in which the renewable generator is a photovoltaic generator, at night the electric energy required by the plurality of electrical loads is supplied only by the external electrical network. In such a case, the electric energy supplied by the external electrical network could overall be greater than the electrical power introduced in the network itself by the power plant of which the generator is part. In such a case the energy exchanged between the plant and the external electrical network would be negative; by setting a positive value for the second target power the control system will activate the regulating unit only when the energy debt of the plant with respect to the external electrical network has been paid off.

This means that the control system in addition to optimising the energy consumption of the power plant to which it is connected, makes it possible to regulate the energy exchange with the external electrical network so that the plant is not in debt of energy with respect to the network itself.

It is finally clear that the control system and method, as well as the civilian and/or industrial power plant with optimized consumption thus conceived are subject to numerous modifications and variants, all covered by the invention; moreover, all the details can be replaced by technically equivalent elements. In practice the materials used, as well as the dimensions, can be any according to the technical requirements.

## Claims

1. Control system (40) for optimizing the energy consumption of a civilian and/or industrial power plant (10) wherein the latter comprises:
- a renewable generator (20) suitable for producing electric energy from renewable sources, such as for example a photovoltaic generator or a wind generator;
- a plurality of electrical loads (30, 31), at least one of which being an electrical load (31) controlled by said control system (40), said electrical loads (30, 31) being supplied by said renewable generator (20) and/or by an outer electrical network (60) and/or by accumulation means of electric energy;
and wherein said control system (40) comprises:
- power detection means (41, 45) suitable for detecting the difference between the instantaneous electric power generated by said renewable generator (20) and the instantaneous electric power absorbed overall by said electrical loads (30, 31);
- a unit for regulating power (42, 43) programmed or in any case suitable for controlling, according to a first operation modality, on the basis of the detection of said power detection means (41, 45), the electric power absorbed by said at least one controlled electrical load (31) so that the difference between the instantaneous electric power generated by said renewable generator (20) and the instantaneous electric power absorbed overall by said electrical loads (30, 31) reaches or approaches as much as possible a first predetermined target power.

2. Control system (40) according to claim 1 **characterised in that** said at least one controlled electrical load is a device for converting the energy, suitable for converting electric energy into thermal energy, such as for example a boiler or a stove.

3. Control system according to claim 1 or 2 **characterised in that** said detection means comprise:
- at least one first power sensor (41), suitable for performing continuous detections, and
- a power converter (45) connected to said at least one first power sensor (41) and suitable for generating an amplitude signal proportional to the power detected by the sensor itself (41);

4. Control system (40) according to claim 3 **characterised in that** said unit (42, 43) for regulating power comprises:
- an automatic switch (43) controlled in voltage/current and suitable for connecting in a selective way said at least one controlled electrical load (31) to said renewable generator (20) and/or to said external electrical network (60) and/or to said accumulation means of electric energy; and
- a piloting unit (42) connected to said converter (45) and suitable for sending to said automatic switch (43) a control signal, on the basis of the signal generated by said converter (45) and of said predetermined target power.

5. Control system (40) according to claim 4 **characterised in that** it comprises a safety device (50) connected to said automatic switch (43) so as to inhibit the operation of the latter, said safety device (50) being suitable for being activated manually and/or by means of an external remote control and/or by means of a control coming from a power balancer.

6. Control system (40) according to one or more of the preceding claims, **characterised in that** it comprises, in case said power plant (10) is connected to an external electrical network (60) so as to exchange electric energy with it:
- a counting device (46) suitable for measuring the total power exchanged between said power plant and said external electrical network (60);
- a control unit (47) connected to said counting device (46) and suitable for activating said automatic switch (43) when said exchanged electrical power reaches a second target power.

7. Control system (40) according to one or more of claims from 3 to 6 **characterised in that** it comprises a second power sensor (63), suitable for performing continuous detections of the power generated by said renewable generator (20) and a first switching device (61) connected to said second power sensor (63) and to said regulating unit (42, 43), said first switching device (61) being suitable for assuming a first and a second operative position, wherein it allows the selective connection between said power converter (45) and respectively said first power sensor (41) or said second power sensor (63), said regulating unit (42, 43) assuming, at said first operation position, said first operation modality and, at said second operative position, a second operation modality wherein it controls said controlled load (31) so that the power absorbed by the same reaches or approaches as much as possible the power generated by said renewable generator (20).

8. Control system (40) according to claim 7 **characterised in that** said first switching device (61) is suitable for changing operative position following manual action, for example by pressing a button, or following the reception of a control signal.

9. Control system (40) according to claims 7 or 8 **characterised in that** said piloting unit (42) is provided with two output lines (71, 72) and with a second switching device (62) connected to said first switching device (61), said piloting unit (42) sending, on said first (71) and on said second (72) output line, a control signal for said automatic switch (43) for obtaining respectively the first and the second operation modality, said second switching device (62) being suitable for connecting said first (71) or said second (72) output line to said automatic switch (43), at respectively said first or said second operative position of said first switching device (61).

10. Method for controlling a civilian and/or industrial power plant, comprising:
- a renewable generator (20) suitable for producing electric energy from renewable sources, such as for example a photovoltaic generator or a wind generator;
- a plurality of electrical loads (30, 31) of which at least one is an electrical load controlled (31) by a control system according to one or more of the preceding claims, said electrical loads (30, 31) being supplied by said renewable generator (20) and/or by said external electrical network (60) and/or by said accumulation means for electric energy;
wherein said method comprises the following steps:
- setting a first target power representing the difference between the instantaneous electric power, generated by said renewable generator and the instantaneous electric power absorbed overall by said electrical loads (30, 31);
- detecting the difference between the instantaneous electric power generated by said renewable generator (20) and the instantaneous electric power absorbed overall by said electrical loads (30, 31);
- controlling, on the basis of said detection, the electric power absorbed by said at least one controlled electrical load (31) so that the difference between the instantaneous electric power generated by said renewable generator (20) and the instantaneous electric power absorbed overall by said electrical loads (30, 31) reaches or approaches as much as possible said first set target power.

11. Control method according to claim 10 **characterised in that** said control step is performed by activating an automatic switch (43) suitable for connecting in a selective way said at least one controlled electrical load (31) to said renewable generator (20) and/or to said external electrical network (60) and/or to said accumulation means of electric energy, according to one of the piloting techniques of voltage/current belonging to the group formed by:
- Zero Crossing;
- Single Cycle;
- Burst Firing;
- Phase Angle.

12. Control method according to claim 10 or 11 **characterised in that** it comprises, in case said power plant (10) is connected to an external electrical network (60) so as to exchange electric energy with it, the following steps:
- setting a second target power, representing the desired value of the electrical power exchanged between said power plant (10) and said external electrical network (60);
- detecting the electrical power exchanged between said power plant (10) and said external electrical network (60);
- in case said electrical power exchanged and detected is substantially equal to said second target power, activating said automatic switch (43) in order to control the electric power absorbed by said at least one controlled electrical load (31);
- in case said electrical power exchanged and detected is not substantially equal to said second target power, deactivating said automatic switch (43) in order to inhibit the execution of said control step of the electrical power absorbed by said at least one controlled electrical load (31).

13. Civilian and/or industrial power plant (10) with an optimized consumption, comprising:
- a renewable generator (20) suitable for producing electric energy from renewable sources, such as for example a photovoltaic generator or a wind generator;
- a plurality of electrical loads (30, 31) supplied by said renewable generator (20) and/or by an external electrical network (60) and/or by accumulation means of electric energy;
said civilian and/or industrial power plant (10) with an optimized consumption being **characterised in that** it comprises a control system (40) according to one or more of claims 1 to 9, said control system (40) being suitable for controlling at least one (31) among said plurality of electrical loads (30, 31).

## Patentansprüche

1. Steuerungssystem (40) zur Optimierung des Energieverbrauchs eines zivilen und/oder industriellen Kraftwerks (10), wobei Letzteres Folgendes umfasst:
- einen regenerativen Stromerzeuger (20), der geeignet ist, elektrische Energie aus erneuerbaren Quellen zu erzeugen, wie beispielsweise ein Photovoltaik-Stromerzeuger oder ein Windstromerzeuger;
- eine Vielzahl elektrischer Verbraucher (30, 31), von denen mindestens einer ein von diesem Steuerungssystem (40) gesteuerter elektrischer Verbraucher (31) ist, wobei diese elektrischen Verbraucher (30, 31) von dem regenerativen Stromerzeuger (20) und/oder von einem externen Stromnetz (60) und/oder von Mitteln zum Speichern elektrischer Energie gespeist werden;
und wobei dieses Steuerungssystem (40) Folgendes umfasst:
- Leistungserfassungsmittel (41, 45), die geeignet sind, die Differenz zwischen der von dem regenerativen Stromerzeuger (20) erzeugten momentanen elektrischen Leistung und der von den elektrischen Verbrauchern (30, 31) insgesamt aufgenommenen momentanen elektrischen Leistung zu erfassen;
- eine Einheit zur Leistungsregelung (42, 43), die dazu programmiert oder jedenfalls geeignet ist, gemäß einem ersten Betriebsmodus auf der Basis der Erfassung der Leistungserfassungsmittel (41, 45) die von dem mindestens einen gesteuerten elektrischen Verbraucher (31) aufgenommene elektrische Leistung so zu steuern, dass die Differenz zwischen der von dem regenerativen Stromerzeuger (20) erzeugten momentanen elektrischen Leistung und der von den elektrischen Verbrauchern (30, 31) insgesamt aufgenommenen elektrischen Leistung eine erste vorbestimmte Soll-Leistung erreicht oder sich ihr so weit wie möglich annähert.

2. Steuerungssystem (40) nach Anspruch 1, **dadurch gekennzeichnet, dass** der mindestens eine gesteuerte elektrische Verbraucher eine Vorrichtung zum Umwandeln der Energie ist, die geeignet ist, elektrische Energie in thermische Energie umzuwandeln, wie beispielsweise ein Boiler oder ein Ofen.

3. Steuerungssystem nach Anspruch 1 oder 2, **dadurch gekennzeichnet, dass** die Erfassungsmittel Folgendes umfassen:
- mindestens einen ersten Leistungssensor (41), der geeignet ist, kontinuierliche Erfassungen durchzuführen, und
- einen Leistungswandler (45), der mit dem mindestens einen ersten Leistungssensor (41) verbunden und geeignet ist, ein zu der vom Sensor (41) erfassten Leistung proportionales Amplitudensignal zu erzeugen.

4. Steuerungssystem (40) nach Anspruch 3, **dadurch gekennzeichnet, dass** die Einheit (42, 43) zur Leistungsregelung Folgendes umfasst:
- einen automatischen Schalter (43), der spannungs-/stromgesteuert und geeignet ist, den mindestens einen gesteuerten elektrischen Verbraucher (31) selektiv mit dem regenerativen Stromerzeuger (20) und/oder mit dem externen Stromnetz (60) und/oder mit den Mitteln zum Speichern elektrischer Energie zu verbinden; und
- eine Ansteuereinheit (42), die mit dem Wandler (45) verbunden und geeignet ist, auf der Grundlage des vom Wandler (45) erzeugten Signals und der vorbestimmten Soll-Leistung ein Steuersignal an den automatischen Schalter (43) zu senden.

5. Steuerungssystem (40) nach Anspruch 4, **dadurch gekennzeichnet, dass** es eine Sicherheitsvorrichtung (50) umfasst, die mit dem automatischen Schalter (43) verbunden ist, um die Betätigung des Letzteren zu verhindern, wobei diese Sicherheitsvorrichtung (50) geeignet ist, von Hand und/oder mittels einer externen Fernsteuerung und/oder mittels einer von einer Leistungsausgleichsvorrichtung kommenden Steuerung betätigt zu werden.

6. Steuerungssystem (40) nach einem oder mehreren der vorhergehenden Ansprüche, **dadurch gekennzeichnet, dass** es dann, wenn das Kraftwerk (10) mit einem externen Stromnetz (60) verbunden ist, um mit ihm elektrische Energie auszutauschen, Folgendes umfasst:
- eine Zählvorrichtung (46), die geeignet ist, die zwischen dem Kraftwerk und dem externen Stromnetz (60) ausgetauschte Gesamtleistung zu messen;
- eine Steuereinheit (47), die mit dieser Zählvorrichtung (46) verbunden und geeignet ist, den automatischen Schalter (43) einzuschalten, wenn die ausgetauschte elektrische Leistung eine zweite Soll-Leistung erreicht.

7. Steuerungssystem (40) nach einem oder mehreren der Ansprüche von 3 bis 6, **dadurch gekennzeichnet, dass** es einen zweiten Leistungssensor (63), der geeignet ist, kontinuierliche Erfassungen der vom regenerativen Stromerzeuger (20) erzeugten Leistung durchzuführen, und eine erste Schaltvorrichtung (61), die mit diesem zweiten Leistungssensor (63) und mit der Regeleinheit (42, 43) verbunden ist, umfasst, wobei diese erste Schaltvorrichtung (61) geeignet ist, eine erste und eine zweite Wirkstellung einzunehmen, in denen sie die selektive Verbindung zwischen dem Leistungswandler (45) und dem ersten Leistungssensor (41) beziehungsweise dem zweiten Leistungssensor (63) ermöglicht, wobei diese Regeleinheit (42, 43) in der ersten Wirkstellung den ersten Betriebsmodus und in der zweiten Wirkstellung einen zweiten Betriebsmodus annimmt, in dem sie den gesteuerten Verbraucher (31) so steuert, dass die von diesem aufgenommene Leistung die von dem regenerativen Stromerzeuger (20) erzeugte Leistung erreicht oder sich ihr so weit wie möglich annähert.

8. Steuerungssystem (40) nach Anspruch 7, **dadurch gekennzeichnet, dass** die erste Schaltvorrichtung (61) geeignet ist, die Wirkstellung im Anschluss an eine manuelle Betätigung, beispielsweise durch Drücken eines Tasters, oder im Anschluss an den Empfang eines Steuersignals zu ändern.

9. Steuerungssystem (40) nach Anspruch 7 oder 8, **dadurch gekennzeichnet, dass** die Ansteuereinheit (42) mit zwei Ausgangsleitungen (71, 72) und mit einer zweiten Schaltvorrichtung (62) versehen ist, die mit der ersten Schaltvorrichtung (61) verbunden ist, wobei diese Ansteuereinheit (42) auf der ersten (71) und auf der zweiten (72) Ausgangsleitung ein Steuersignal für den automatischen Schalter (43) sendet, um den ersten beziehungsweise den zweiten Betriebsmodus zu erhalten, wobei diese zweite Schaltvorrichtung (62) geeignet ist, die erste (71) oder die zweite (72) Ausgangsleitung mit dem automatischen Schalter (43) in der ersten beziehungsweise der zweiten Wirkstellung der ersten Schaltvorrichtung (61) zu verbinden.

10. Verfahren zur Steuerung eines zivilen und/oder industriellen Kraftwerks, umfassend:
- einen regenerativen Stromerzeuger (20), der geeignet ist, elektrische Energie aus erneuerbaren Quellen zu erzeugen, wie beispielsweise ein Photovoltaik-Stromerzeuger oder ein Windstromerzeuger;
- eine Vielzahl elektrischer Verbraucher (30, 31), von denen mindestens einer ein elektrischer Verbraucher (31) ist, der von einem Steuerungssystem nach einem oder mehreren der vorhergehenden Ansprüche gesteuert wird, wobei diese elektrischen Verbraucher (30, 31) von dem regenerativen Stromerzeuger (20) und/oder von dem externen Stromnetz (60) und/oder von Mitteln zum Speichern elektrischer Energie gespeist werden;
wobei dieses Verfahren die folgenden Schritte umfasst:
- Festlegen einer ersten Soll-Leistung, welche die Differenz zwischen der momentanen elektrischen Leistung, die von dem regenerativen Stromerzeuger erzeugt wird, und der momentanen elektrischen Leistung repräsentiert, die insgesamt von den elektrischen Verbrauchern (30, 31) aufgenommen wird;
- Erfassen der Differenz zwischen der von dem regenerativen Stromerzeuger (20) erzeugten momentanen elektrischen Leistung und der von den elektrischen Verbrauchern (30, 31) insgesamt aufgenommenen momentanen elektrischen Leistung;
- Steuern, auf der Grundlage dieser Erfassung, der von dem mindestens einen gesteuerten elektrischen Verbraucher (31) aufgenommenen elektrischen Leistung derart, dass die Differenz zwischen der von dem regenerativen Stromerzeuger (20) erzeugten momentanen elektrischen Leistung und der von den elektrischen Verbrauchern (30, 31) insgesamt aufgenommenen momentanen elektrischen Leistung die erste festgelegte Soll-Leistung erreicht oder sich ihr so weit wie möglich annähert.

11. Steuerungsverfahren nach Anspruch 10, **dadurch gekennzeichnet, dass** der Steuerungsschritt ausgeführt wird, indem ein automatischer Schalter (43) eingeschaltet wird, der geeignet ist, den mindestens einen gesteuerten elektrischen Verbraucher (31) selektiv mit dem regenerativen Stromerzeuger (20) und/oder mit dem externen Stromnetz (60) und/oder mit den Mitteln zum Speichern elektrischer Energie gemäß einem der Verfahren zum Steuern von Spannung/Strom zu verbinden, das zu der Gruppe gehört, die aus Folgendem gebildet wird:
- Nulldurchgang;
- Einzelzyklus;
- Pulspaket;
- Phasenwinkel.

12. Steuerverfahren nach Anspruch 10 oder 11, **dadurch gekennzeichnet, dass** es dann, wenn das Kraftwerk (10) mit einem externen Stromnetz (60) verbunden ist, um mit ihm elektrische Energie auszutauschen, die folgenden Schritte umfasst:
- Festlegen einer zweiten Soll-Leistung, die den gewünschten Wert der zwischen dem Kraftwerk (10) und dem externen Stromnetz (60) ausgetauschten elektrischen Leistung repräsentiert;
- Erfassen der zwischen dem Kraftwerk (10) und dem externen Stromnetz (60) ausgetauschten elektrischen Leistung;
- falls die ausgetauschte und erfasste elektrische Leistung im Wesentlichen gleich dieser zweiten Soll-Leistung ist, Einschalten des automatischen Schalters (43), um die von dem mindestens einen gesteuerten elektrischen Verbraucher (31) aufgenommene elektrische Leistung zu steuern;
- falls die ausgetauschte und erfasste elektrische Leistung nicht im Wesentlichen gleich dieser zweiten Soll-Leistung ist, Ausschalten des automatischen Schalters (43), um die Durchführung des Schritts zum Steuern der von dem mindestens einen gesteuerten elektrischen Verbraucher (31) aufgenommenen elektrischen Leistung zu verhindern.

13. Ziviles und/oder industrielles Kraftwerk (10) mit einem optimierten Verbrauch, umfassend:
- einen regenerativen Stromerzeuger (20), der geeignet ist, elektrische Energie aus erneuerbaren Quellen zu erzeugen, wie beispielsweise ein Photovoltaik-Stromerzeuger oder ein Windstromerzeuger;
- eine Vielzahl von elektrischen Verbrauchern (30, 31), die von dem regenerativen Stromerzeuger (20) und/oder von einem externen Stromnetz (60) und/oder von Mitteln zum Speichern elektrischer Energie gespeist werden;
wobei dieses zivile und/oder industrielle Kraftwerk (10) mit einem optimierten Verbrauch **dadurch gekennzeichnet ist, dass** es ein Steuerungssystem (40) nach einem oder mehreren der Ansprüche von 1 bis 9 umfasst, wobei dieses Steuerungssystem (40) geeignet ist, mindestens einen (31) unter der Vielzahl von elektrischen Verbrauchern (30, 31) zu steuern.

## Revendications

1. Système de commande (40) pour optimiser la consommation d'énergie d'une centrale électrique civile et/ou industrielle (10) où cette dernière comprend :
- un générateur à énergie renouvelable (20) adapté pour produire une énergie électrique à partir de sources renouvelables, comme par exemple un générateur photovoltaïque ou une éolienne ;
- une pluralité de charges électriques (30, 31), au moins une desquelles étant une charge électrique (31) commandée par ledit système de commande (40), lesdites charges électriques (30, 31) étant alimentées par ledit générateur à énergie renouvelable (20) et/ou par un réseau électrique extérieur (60) et/ou par des moyens d'accumulation d'énergie électrique ;
et dans lequel ledit système de commande (40) comprend :
- des moyens de détection de puissance (41, 45) adaptés pour détecter la différence entre la puissance électrique instantanée générée par ledit générateur à énergie renouvelable (20) et la puissance électrique instantanée absorbée globalement par lesdites charges électriques (30, 31) ;
- une unité de régulation de puissance (42, 43) programmée ou en tout cas adaptée pour commander, selon une première modalité de fonctionnement, sur la base de la détection desdits moyens de détection de puissance (41, 45), la puissance électrique absorbée par ladite au moins une charge électrique commandée (31) de manière que la différence entre la puissance électrique instantanée générée par ledit générateur à énergie renouvelable (20) et la puissance électrique instantanée absorbée globalement par lesdites charges électriques (30, 31) atteigne ou approche le plus possible une première puissance cible prédéterminée.

2. Système de commande (40) selon la revendication 1, **caractérisé en ce que** ladite au moins une charge électrique commandée est un dispositif pour convertir l'énergie, adapté pour convertir une énergie électrique en énergie thermique, comme par exemple une chaudière ou un poêle.

3. Système de commande selon la revendication 1 ou 2, **caractérisé en ce que** lesdits moyens de détection comprennent :
- au moins un premier détecteur de puissance (41), adapté pour effectuer des détections continues, et
- un convertisseur de puissance (45) connecté audit au moins un premier détecteur de puissance (41) et adapté pour générer un signal d'amplitude proportionnel à la puissance détectée par le capteur lui-même (41).

4. Système de commande (40) selon la revendication 3, **caractérisé en ce que** ladite unité de régulation de puissance (42, 43) comprend :
- un commutateur automatique (43) commandé en tension/courant et adapté pour connecter d'une manière sélective ladite au moins une charge électrique commandée (31) audit générateur à énergie renouvelable (20) et/ou audit réseau électrique externe (60) et/ou auxdits moyens d'accumulation d'énergie électrique ; et
- une unité de pilotage (42) connectée audit convertisseur (45) et adaptée pour transmettre un signal de commande audit commutateur automatique (43), sur la base du signal généré par ledit convertisseur (45) et de ladite puissance cible prédéterminée.

5. Système de commande (40) selon la revendication 4, **caractérisé en ce qu'**il comprend un dispositif de sécurité (50) connecté audit commutateur automatique (43) de manière à empêcher le fonctionnement de ce dernier, ledit dispositif de sécurité (50) étant adapté pour être activé manuellement et/ou au moyen d'une commande à distance externe et/ou au moyen d'une commande provenant d'un équilibreur de puissance.

6. Système de commande (40) selon une ou plusieurs des revendications précédentes, **caractérisé en ce qu'**il comprend, dans le cas où ladite centrale électrique (10) est connectée à un réseau électrique externe (60) de manière à échanger de l'énergie électrique avec celui-ci :
- un dispositif compteur (46) adapté pour mesurer la puissance totale échangée entre ladite centrale électrique et ledit réseau électrique externe (60) ;
- une unité de commande (47) connectée audit dispositif compteur (46) et adaptée pour activer ledit commutateur automatique (43) quand ladite puissance électrique échangée atteint une deuxième puissance cible.

7. Système de commande (40) selon une ou plusieurs des revendications 3 à 6, **caractérisé en ce qu'**il comprend un deuxième détecteur de puissance (63), adapté pour effectuer des détections continues de la puissance générée par ledit générateur à énergie renouvelable (20) et un premier dispositif de commutation (61) connecté audit deuxième détecteur de puissance (63) et à ladite unité de régulation (42, 43), ledit premier dispositif de commutation (61) étant adapté pour prendre une première et une deuxième position fonctionnelle, dans lesquelles il permet la connexion sélective entre ledit convertisseur de puissance (45) et respectivement ledit premier détecteur de puissance (41) ou ledit deuxième détecteur de puissance (63), ladite unité de régulation (42, 43) adoptant, dans ladite première position fonctionnelle, ladite première modalité de fonctionnement et, dans ladite deuxième position fonctionnelle, une deuxième modalité de fonctionnement dans laquelle elle commande ladite charge commandée (31) de manière que la puissance absorbée par celle-ci atteigne ou approche le plus possible la puissance générée par ledit générateur à énergie renouvelable (20).

8. Système de commande (40) selon la revendication 7, **caractérisé en ce que** ledit premier dispositif de commutation (61) est adapté pour changer de position fonctionnelle suite à une action manuelle, par exemple en actionnant un bouton, ou suite à la réception d'un signal de commande.

9. Système de commande (40) selon la revendication 7 ou 8, **caractérisé en ce que** ladite unité de pilotage (42) est munie de deux lignes de sortie (71, 72) et d'un deuxième dispositif de commutation (62) connecté audit premier dispositif de commutation (61), ladite unité de pilotage (42) transmettant, sur ladite première (71) et sur ladite deuxième (72) ligne de sortie, un signal de commande pour ledit commutateur automatique (43) pour obtenir respectivement la première et la deuxième modalité de fonctionnement, ledit deuxième dispositif de commutation (62) étant adapté pour connecter ladite première (71) ou ladite deuxième (72) ligne de sortie audit commutateur automatique (43), respectivement dans ladite première ou ladite deuxième position fonctionnelle dudit premier dispositif de commutation (61).

10. Procédé pour commander une centrale électrique civile et/ou industrielle, comprenant :
- un générateur à énergie renouvelable (20) adapté pour produire une énergie électrique à partir de sources renouvelables, comme par exemple un générateur photovoltaïque ou une éolienne ;
- une pluralité de charges électriques (30, 31) dont au moins une est une charge électrique (31) commandée par un système de commande selon une ou plusieurs des revendications précédentes, lesdites charges électriques (30, 31) étant alimentées par ledit générateur à énergie renouvelable (20) et/ou par ledit réseau électrique externe (60) et/ou par lesdits moyens d'accumulation d'énergie électrique ;
dans lequel ledit procédé comprend les étapes suivantes :
- la détermination d'une première puissance cible représentant la différence entre la puissance électrique instantanée générée par ledit générateur à énergie renouvelable et la puissance électrique instantanée absorbée globalement par lesdites charges électriques (30, 31) ;
- la détection de la différence entre la puissance électrique instantanée générée par ledit générateur à énergie renouvelable (20) et la puissance électrique instantanée absorbée globalement par lesdites charges électriques (30, 31) ;
- la commande, sur la base de ladite détection, de la puissance électrique absorbée par ladite au moins une charge électrique commandée (31) de manière que la différence entre la puissance électrique instantanée générée par ledit générateur à énergie renouvelable (20) et la puissance électrique instantanée absorbée globalement par lesdites charges électriques (30, 31) atteigne ou approche le plus possible ladite première puissance cible déterminée.

11. Procédé de commande selon la revendication 10, **caractérisé en ce que** ladite étape de commande est effectuée en activant un commutateur automatique (43) adapté pour connecter d'une manière sélective ladite au moins une charge électrique commandée (31) audit générateur à énergie renouvelable (20) et/ou audit réseau électrique externe (60) et/ou auxdits moyens d'accumulation d'énergie électrique, selon une des techniques de pilotage de tension/courant appartenant au groupe formé par :
- passage par zéro ;
- cycle unique ;
- train d'impulsions ;
- angle de phase.

12. Procédé de commande selon la revendication 10 ou 11, **caractérisé en ce qu'**il comprend, dans le cas où ladite centrale électrique (10) est connectée à un réseau électrique externe (60) de manière à échanger de l'énergie électrique avec celui-ci, les étapes suivantes :
- la détermination d'une deuxième puissance cible, représentant la valeur désirée de la puissance électrique échangée entre ladite centrale électrique (10) et ledit réseau électrique externe (60) ;
- la détection de la puissance électrique échangée entre ladite centrale électrique (10) et ledit réseau électrique externe (60) ;
- dans le cas où ladite puissance électrique échangée et détectée est sensiblement égale à ladite deuxième puissance cible, l'activation dudit commutateur automatique (43) de manière à commander la puissance électrique absorbée par ladite au moins une charge électrique commandée (31) ;
- dans le cas où ladite puissance électrique échangée et détectée n'est pas sensiblement égale à ladite deuxième puissance cible, la désactivation dudit commutateur automatique (43) de manière à empêcher l'exécution de ladite étape de commande de la puissance électrique absorbée par ladite au moins une charge électrique commandée (31).

13. Centrale électrique civile et/ou industrielle (10) avec une consommation optimisée, comprenant :
- un générateur à énergie renouvelable (20) adapté pour produire une énergie électrique à partir de sources renouvelables, comme par exemple un générateur photovoltaïque ou une éolienne ;
- une pluralité de charges électriques (30, 31) alimentées par ledit générateur à énergie renouvelable (20) et/ou par un réseau électrique extérieur (60) et/ou par des moyens d'accumulation d'énergie électrique ;
ladite centrale électrique civile et/ou industrielle (10) avec une consommation optimisée étant **caractérisée en ce qu'**elle comprend un système de commande (40) selon une ou plusieurs des revendications 1 à 9, ledit système de commande (40) étant adapté pour commander au moins une (31) parmi ladite pluralité de charges électriques (30, 31).
